# EUROPEAN PATENT APPLICATION

(11) **EP 4 439 815 A1**
(43) Date of publication of application: **02.10.2024**
(21) Application number: 22900110.2
(22) Date of filing: 11.10.2022
(51) Int. Cl.: H01M 50/186

(54) **BATTERY CELL, BATTERY AND ELECTRICAL APPARATUS**

(30) Priority: 30.11.2021 CN 202122983543 U
(71) Applicant: Contemporary Amperex Technology (Hong Kong) Limited, Central, Central And Western District (HK)
(72) Inventor: GAO, Siwei, Ningde, Fujian 352100 (CN); LI, Fang, Ningde, Fujian 352100 (CN); CHEN, Shengwang, Ningde, Fujian 352100 (CN); CHEN, Fan, Ningde, Fujian 352100 (CN); CHEN, Lianfu, Ningde, Fujian 352100 (CN); YANG, Xin, Ningde, Fujian 352100 (CN); GUO, Zhiyong, Ningde, Fujian 352100 (CN); FAN, Donghua, Ningde, Fujian 352100 (CN)
(74) Representative: Rowlands, Stuart Michael
(86) International application number: PCT/CN2022/124695
(87) International publication number: WO 2023/098304

(57) **Abstract**

Provided are a battery cell, a battery, and electrical apparatus. The battery cell in an embodiment of the present application comprises a housing, an electrode assembly, and an electrode lead-out section. An edge of the housing is provided with a sealing area; the electrode assembly is accommodated in the housing; the electrode assembly comprises a main body and a tab connected to the main body; at least part of the electrode lead-out section is electrically connected to the tab so as to form a connecting part; at least part of the connecting part is located in the sealing area. The connecting part and the sealing area at least partially overlap, so that the space occupied by the connecting part in the housing can be reduced, thereby improving the space utilization rate of the electrode assembly, and improving the energy density of the battery cell.

## Description

### CROSS-REFERENCE TO RELATED APPLICATIONS

This application claims priority to Chinese Patent Application No. 202122983543.8, filed on November 30, 2021 and entitled "BATTERY CELL, BATTERY, AND ELECTRIC APPARATUS", which is incorporated herein by reference in its entirety.

### TECHNICAL FIELD

This application relates to the field of battery technologies, and in particular, to a battery cell, a battery, and an electric apparatus.

### BACKGROUND

Battery cells are widely used in electronic devices such as mobile phones, notebook computers, electric bicycles, electric vehicles, electric airplanes, electric ships, electric toy cars, electric toy ships, electric toy airplanes, and electric tools. Battery cells may include nickel-cadmium battery cells, nickel-hydrogen battery cells, lithium-ion battery cells, secondary alkaline zinc-manganese battery cells, and the like.

In the development of battery technology, there is an urgent need to improve performance of battery cells, especially to increase energy density of battery cells.

### SUMMARY

This application provides a battery cell, a battery, and an electric apparatus to increase energy density of a battery cell.

According to a first aspect, this application proposes a battery cell including a housing, an electrode assembly, and an electrode lead-out portion. The housing is provided with a sealed area at an edge. The electrode assembly is accommodated in the housing, and the electrode assembly includes a main body portion and a tab connected to the main body portion. At least a portion of the electrode lead-out portion is electrically connected to the tab to form a connection portion, and at least a portion of the connection portion is located in the sealed area.

In the foregoing technical solution, the at least a portion of the connection portion is located in the sealed area. In other words, the connection portion and at least a portion of the sealed area overlap, which can reduce the space inside the housing that is occupied by the connection portion, thereby improving utilization of space inside the battery cell and increasing energy density of the battery cell.

In some embodiments, the battery cell further includes an adhesion member, where the adhesion member is configured to adhere the connection portion to the sealed area. The adhesion member can separate the electrode lead-out portion from the sealed area so as to reduce the risk of contact between the electrode lead-out portion and a metal layer of the housing, thereby preventing a short circuit and improving safety performance of the battery cell.

In some embodiments, the adhesion member fully covers a surface of the connection portion. The adhesion member fully covers the surface of the connection portion, which can prevent, to a certain extent, welding slag produced during welding from falling into the battery cell, thereby reducing the possibility of short circuit in the battery cell. The connection portion is fully separated from the sealed area by the adhesion member, which can further reduce the risk of contact between the electrode lead-out portion and metal of the housing, thereby further improving the safety performance of the battery cell.

In some embodiments, a dimension of the adhesion member along a first direction exceeds a dimension of the electrode lead-out portion along the first direction, where the first direction is an extension direction of the sealed area; and/or the dimension of the adhesion member along the first direction exceeds a dimension of the tab along the first direction. The adhesion member can fully cover the electrode lead-out portion and the tab in the first direction, which further reduces the risk of contact between the connection portion and the metal layer of the housing and can reduce the risk of burrs produced after cutting of the electrode lead-out portion and tab from piercing the housing.

In some embodiments, a portion of the adhesion member is arranged on an outer side of the housing along a second direction, where the second direction is a direction from the main body portion to the tab. The adhesion member on the outer side of an edge of the housing can connect the sealed area, improving sealing performance at the connection and reducing the risk of external water vapor entering the housing from the connection.

In some embodiments, the connection portion is entirely located in the sealed area. In this way, the connection portion occupies no space inside the housing, thereby further improving space utilization of the electrode assembly and further increasing the energy density of the battery cell.

In some implementations, a dimension of the sealed area along the second direction is larger than a dimension of the connection portion along the first direction, where the second direction is a direction from the main body portion to the tab. The sealed area fully covers the connection portion in the second direction, which can seal a side of the connection portion away from the electrode assembly and improve sealing performance, thereby reducing the risk of external water and oxygen entering the housing from the connection portion and guaranteeing electrochemical performance of the battery cell.

In some embodiments, the edge has a first surface at an end away from the main body portion, and the sealed area includes an end portion away from the main body portion along a second direction, where a distance between the first surface and the end portion is 1 mm to 2 mm, and the second direction is a direction from the main body portion to the tab. With the distance in this range, the possibility of overflow of a heat sealing layer of the housing during top sealing is reduced. Moreover, setting this range can also reduce the risk of external water and oxygen entering the housing from the heat sealing layer, thereby guaranteeing electrochemical performance of the battery.

According to a second aspect, this application proposes a battery including the battery cell according to any one of the embodiments in the first aspect of this application.

According to a third aspect, this application proposes an electric apparatus including the battery according to an embodiment in the second aspect of this application, where the battery is configured to supply electrical energy.

### BRIEF DESCRIPTION OF DRAWINGS

To describe the technical solutions of the embodiments of this application more clearly, the following briefly describes the accompanying drawings required for describing the embodiments of this application. It will be apparent that the accompanying drawings described below show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is an exploded schematic view of a battery according to some embodiments of this application;
FIG. 3 is a schematic structural diagram of a battery module in FIG. 2;
FIG. 4 is a schematic structural diagram of a battery cell according to some embodiments of this application;
FIG. 5 is a schematic cross-sectional view of the battery cell in FIG. 4;
FIG. 6 is an enlarged schematic diagram of portion A of the battery cell in FIG. 5;
FIG. 7 is another enlarged schematic diagram of portion A of the battery cell in FIG. 5;
FIG. 8 is a schematic structural diagram of a battery cell according to other embodiments of this application; and
FIG. 9 is another enlarged schematic diagram of the battery cell in FIG. 5 in block A.

In the accompanying drawings, the figures are not necessarily drawn to scale.

### Description of reference signs:

X. first direction; Y. second direction; Z. thickness direction;
1. vehicle; 2. battery; 3. controller; 4. motor; 5. box; 51. first box portion; 52. second box portion; 53. accommodating space; 6. battery module; 7. battery cell;
71. housing; 711. edge; 711a. sealed area; 711b. first surface; 710a. first packaging film; 710b. second packaging film;
72. electrode assembly; 721. main body portion; 722. tab;
73. electrode lead-out portion;
74. connection portion;
75. adhesion member; 751. body portion; and 752. positioning portion.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. It will be apparent that the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

The battery cell in the application may include a lithium-ion secondary battery cell, a lithium-ion primary battery cell, a lithium-sulfur battery cell, a lithium-sodium-ion battery cell, a sodium-ion battery cell, a magnesium-ion battery cell, or the like. This is not limited in the embodiments of this application. In this application, the battery cell is a pouch cell.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charge or discharge of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The positive electrode current collector includes a positive electrode current collecting portion and a positive electrode tab exceeding the positive electrode current collecting portion. The positive electrode current collecting portion is coated with the positive electrode active substance layer, and at least a portion of the positive electrode tab is coated with no positive electrode active substance layer. A lithium-ion battery cell is used as an example, for which, the positive electrode current collector may be made of aluminum, and the positive electrode active substance layer includes a positive electrode active substance, where the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The negative electrode current collector includes a negative electrode current collecting portion and a negative electrode tab exceeding the negative electrode current collecting portion. The negative electrode current collecting portion is coated with the negative electrode active substance layer, and at least a portion of the negative electrode tab is coated with no negative electrode active substance layer. The negative electrode current collector may be made of copper, and the negative electrode active substance layer includes a negative electrode active substance, where the negative electrode active substance may be carbon, silicon, or the like. To allow a large current to pass through without any fusing, a plurality of positive electrode tabs are provided and stacked together, and a plurality of negative electrode tabs are provided and stacked together. The separator may be made of PP (polypropylene, polypropylene), PE (polyethylene, polyethylene), or the like. In addition, the electrode assembly may be a wound structure or a stacked structure. However, the embodiments of this application are not limited thereto.

The battery cell further includes a housing and an electrode lead-out portion, where the housing can include two layers of packaging films. Top sealing and side sealing are performed for the two layers of packaging films through packaging by packaging equipment. The electrode lead-out portion is connected to a tab. The tab and the electrode lead-out portion need to be connected before top sealing, and then top sealing is performed for the two layers of packaging films.

The inventors have found that when a connection portion between the tab and the electrode lead-out portion is arranged independently from a sealed area for top sealing, the connection portion needs to occupy space inside the housing, which leads to relatively small available space of the electrode assembly and lower energy density of the battery cell.

In view of this, the embodiments of this application propose a technical solution. In the technical solution, a battery cell includes a housing, an electrode assembly, and an electrode lead-out portion. The housing is provided with a sealed area at an edge. The electrode assembly is accommodated in the housing, and the electrode assembly includes a main body portion and a tab connected to the main body portion. At least a portion of the electrode lead-out portion is electrically connected to the tab to form a connection portion, and at least a portion of the connection portion is located in the sealed area. For a battery cell with such structure, utilization of space inside the housing is relatively high, which can increase space occupied by the electrode assembly, thereby increasing energy density of the battery cell.

The technical solution described in the embodiments of the application is applicable to battery cells, batteries including battery cells, and electric apparatuses using batteries.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as example for description of the following embodiments.

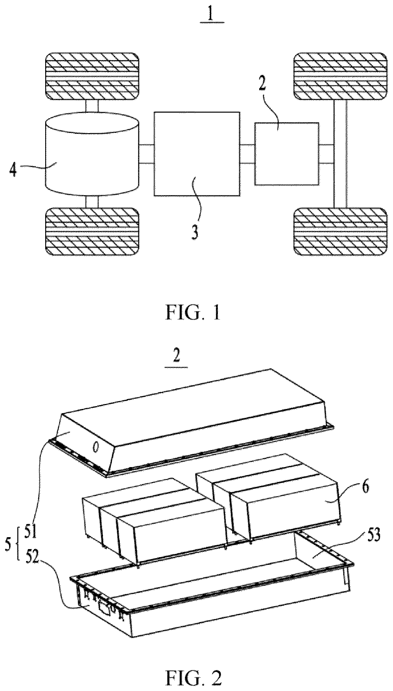

FIG. 1 is a schematic structural diagram of a vehicle according to some embodiments of this application. As shown in FIG. 1, the vehicle 1 is provided with a battery 2 inside, and the battery 2 may be disposed at the bottom, front, or rear of the vehicle 1. The battery 2 may be configured to supply power to the vehicle 1. For example, the battery 2 may be used as an operational power source for the vehicle 1.

The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used as not only the operational power source for the vehicle 1 but also a driving power source for the vehicle 1, replacing or partially replacing fossil fuel or natural gas to provide driving traction for the vehicle 1.

FIG. 2 is an exploded schematic view of a battery according to some embodiments of this application. As shown in FIG. 2, the battery 2 includes a box 5 and a battery cell (not shown in FIG. 2), and the battery cell is accommodated in the box 5.

The box 5 is configured to accommodate the battery cell, and the box 5 may be a variety of structures. In some embodiments, the box 5 may include a first box portion 51 and a second box portion 52. The first box portion 51 and the second box portion 52 fit together, so that the first box portion 51 and the second box portion 52 jointly define an accommodating space 53 for accommodating the battery cell. The second box portion 52 may be a hollow structure with an opening at one end, the first box portion 51 is a plate-shaped structure, and the first box portion 51 fits on the opening side of the second box portion 52 so as to form the box 5 having the accommodating space 53. Alternatively, both the first box portion 51 and the second box portion 52 may be hollow structures with an opening on one side, and the opening side of the first box portion 51 fits on the opening side of the second box portion 52 so as to form the box 5 having the accommodating space 53. Certainly, the first box portion 51 and the second box portion 52 may be of various shapes, such as cylinder or cuboid.

In order to improve sealing performance after connection of the first box portion 51 and the second box portion 52, a sealing element, such as sealing gum and sealing ring, may further be disposed between the first box portion 51 and the second box portion 52.

Assuming that the first box portion 51 fits on the top of the second box portion 52, the first box portion 51 may also be referred to as an upper box cover, and the second box portion 52 may also be referred to as a lower box body.

There may be one or more battery cells in the battery 2. If a plurality of battery cells are provided, the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety of the plurality of battery cells is accommodated in the box 5; or certainly the plurality of battery cells may be connected in series, parallel, or series-parallel first to form battery modules 6 and then the plurality of battery modules 6 are connected in series, parallel, or series-parallel to form an entirety which is accommodated in the box 5.

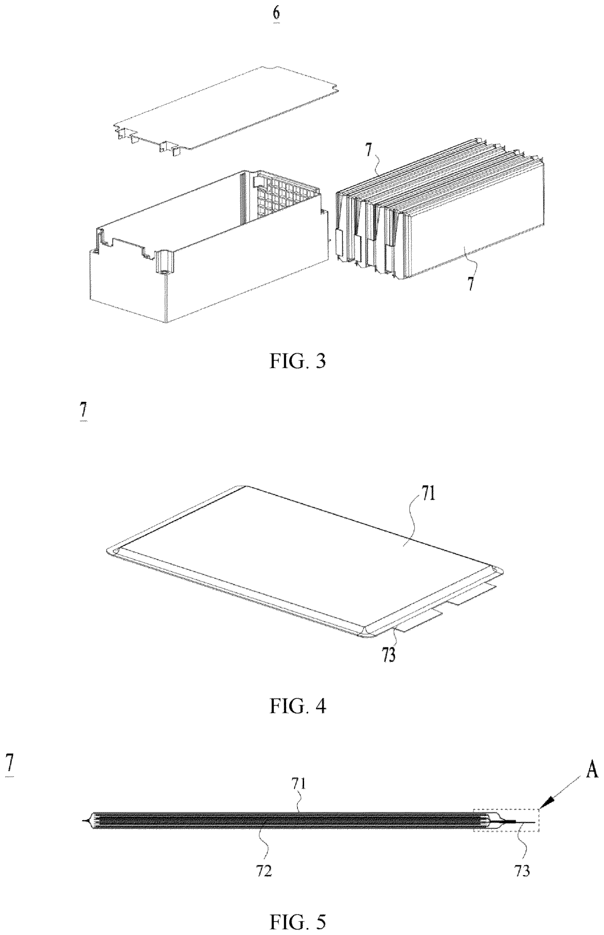

FIG. 3 is a schematic structural diagram of the battery module in FIG. 2. As shown in FIG. 3, in some embodiments, the battery cell 7 is provided in plural, and the plurality of battery cells 7 are connected in series, parallel, or series-parallel first to form battery modules 6. The plurality of battery modules 6 are then connected in series, parallel, or series-parallel to form an entirety which is accommodated in the box.

The plurality of battery cells 7 in the battery module 6 may be electrically connected via a busbar, so that the plurality of battery cells 7 in the battery module 6 are connected in series, parallel, or series-parallel.

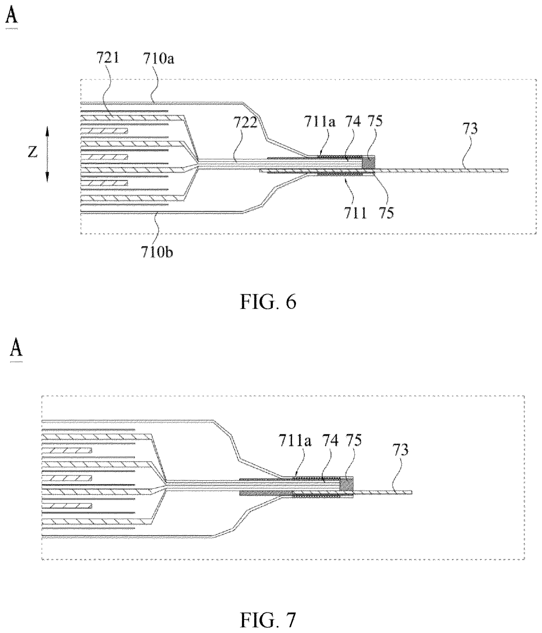

FIG. 4 is a schematic structural diagram of a battery cell according to some embodiments of this application; FIG. 5 is a cross-sectional view of the battery cell in FIG. 4; and FIG. 6 is an enlarged schematic diagram of the battery cell in FIG. 5 in block A.

As shown in FIGs. 4 to 6, the battery cell 7 provided in these embodiments of this application includes a housing 71, an electrode assembly 72, and an electrode lead-out portion 73. The housing 71 is provided with a sealed area 711a at an edge 711. The electrode assembly 72 is accommodated in the housing 71, and the electrode assembly 72 includes a main body portion 721 and a tab 722 connected to the main body portion 721. At least a portion of the electrode lead-out portion 73 is electrically connected to the tab 722 to form a connection portion 74, and at least a portion of the connection portion 74 is located in the sealed area 711a.

An accommodation cavity is formed inside the housing 71 to accommodate the electrode assembly 72 and an electrolyte. A shape of the housing 71 may be determined according to a specific shape of the electrode assembly 72.

The housing 71 may include a first packaging film 710a and a second packaging film 710b, where the first packaging film 710a and the second packaging film 710b are arranged up and down along a thickness direction Z. The electrode assembly 72 is disposed between the first packaging film 710a and the second packaging film 710b. The direction Z in FIG. 6 represents a thickness direction.

The first packaging film 710a and the second packaging film 710b may be arranged separately or integrally. For example, the first packaging film 710a and the second packaging film 710b are obtained by folding one piece of packaging film (for example, aluminum-plastic film or steel-plastic film).

Both the first packaging film 710a and the second packaging film 710b are multilayer structures. For example, the first packaging film 710a and the second packaging film 710b each include a protective layer, a metal layer, and a heat sealing layer, where the protective layer and the heat sealing layer are arranged on two sides of the metal layer, respectively. Specifically, the heat sealing layer may be arranged, through an adhesive, on a surface of the metal layer facing the electrode assembly 72, and the protective layer may be arranged, through an adhesive, on a surface of the metal layer away from the electrode assembly 72.

Optionally, the protective layer may be made of nylon or polyethylene terephthalate, the metal layer may be made of aluminum foil or steel foil, and the heat sealing layer may be made of polypropylene.

The first packaging film 710a and the second packaging film 710b are connected on an outer side of the electrode assembly 72 to form the sealed area 711a. The sealed area 711a is located at the edge 711 of the housing 71. For example, through hot pressing, the heat sealing layer of the first packaging film 710a is welded to the heat sealing layer of the second packaging film 710b to form the sealed area 711a.

The electrode assembly 72 is a core member of the battery cell 7 for implementing charge and discharge functions. The electrode assembly 72 includes a main body portion 721 and a tab 722. The main body portion 721 includes an active substance, and the tab 722 includes no active substance.

One end of the electrode lead-out portion 73 is located in the housing 71 to connect the tab 722 of the electrode assembly 72 inside the housing 71. A connection area between the electrode lead-out portion 73 and the tab 722 forms the connection portion 74. Another end of the electrode lead-out portion 73 may exceed the housing 71 and is configured to electrically connect an external device. The electrode lead-out portion 73 connects the electrode assembly 72 to the external device so as to implement charge and discharge of the electrode assembly 72.

Optionally, the electrode lead-out portion 73 may be welded to the tab 722 of the electrode assembly 72 to be electrically connected to the main body portion 721 of the electrode assembly 72. A welding area of the electrode lead-out portion 73 and tab 722 forms a weld mark. In other words, a location of the weld mark constitutes the connection portion 74.

At least a portion of the electrode lead-out portion 73 of these embodiments of this application is electrically connected to the tab 722 to form the connection portion 74, and at least a portion of the connection portion 74 is located in the sealed area 711a. In other words, the connection portion 74 and at least a portion of the sealed area 711a overlap, which can reduce space inside the housing 71 occupied by the connection portion 74, thereby improving the utilization of space inside the battery cell 7 and increasing energy density of the battery cell 7.

Still referring to FIG. 6, in some embodiments, the battery cell further includes an adhesion member 75, where the adhesion member 75 is configured to adhere the connection portion 74 to the sealed area 711a. The adhesion member 75 may be insulating and can separate the electrode lead-out portion 73 from the sealed area 711a, so as to reduce the risk of contact between the electrode lead-out portion 73 and the metal layer of the housing 71, preventing a short circuit and improving safety performance of the battery cell. For example, the adhesion member 75 may be made of glue or polypropylene. The glue is directly used to adhere the connection portion 74 to the sealed area 711a. The polypropylene is adhesive after hot melt, can be adhered between the connection portion 74 and the sealed area 711a, and can be welded to the heat sealing layer of the sealed area 711a through hot melt to improve sealing performance of the weld.

During welding of the electrode lead-out portion and the tab, weld slag may be generated on the connection portion, and the weld slag may have adverse influence inside the battery cell. For example, the electrode assembly may be pierced, leading to a risk in the battery cell such as short circuit.

FIG. 7 is another enlarged schematic diagram of portion A of the battery cell in FIG. 5.

As shown in FIG. 7, to improve the safety performance of the battery cell, in some embodiments, the adhesion member 75 may fully cover a surface of the connection portion 74. When the adhesion member 75 fully covers the surface of the connection portion 74, the weld slag can be prevented, to a certain extent, from falling into the battery cell, thereby reducing the possibility of short circuit in the battery cell 7. The connection portion 74 and the sealed area 711a are fully separated by the adhesion member 75, which can further reduce the risk of contact between the electrode lead-out portion 73 and metal of the housing, thereby further improving the safety performance of the battery cell 7.

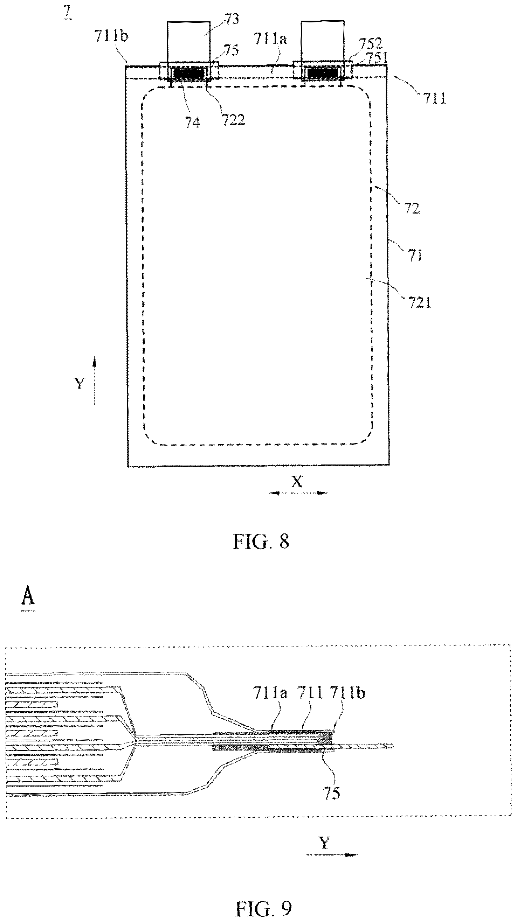

FIG. 8 is a schematic structural diagram of a battery cell according to some other embodiments of this application. FIG. 9 is another enlarged schematic diagram of portion A of the battery cell in FIG. 5.

As shown in FIGs. 8 and 9, optionally, a dimension of the adhesion member 75 along a first direction X exceeds a dimension of the electrode lead-out portion 73 along the first direction X, and the adhesion member 75 can fully cover the electrode lead-out portion 73 in the first direction X, which further reduces the risk of contact between the electrode lead-out portion 73 and the metal layer of the housing 71 and can reduce the risk of burrs produced after cutting of the electrode lead-out portion 73 from piercing the housing 71.

Optionally, the dimension of the adhesion member 75 along the first direction X exceeds a dimension of the tab 722 along the first direction X, and the adhesion member 75 can fully cover the tab 722 in the first direction X, which further reduces the risk of contact between the tab 722 and the metal layer of the housing 71 and can reduce the risk of burrs produced after cutting of the tab 722 from piercing the housing 71.

The direction X shown in FIG. 8 represents the first direction, and the first direction X is an extension direction of the sealed area 711a. A direction Y represents a second direction, and the second direction Y is a direction from the main body portion 721 to the tab 722. The first direction X is perpendicular to the thickness direction Z, and the first direction X is perpendicular to the second direction Y.

The adhesion member 75 adheres the connection portion 74 to the sealed area 711a. As thickness of the sealed area 711a at the junction is relatively large, there is a relatively high risk of external water and oxygen entering the housing 71 from the junction, and the external water and oxygen, if entering the housing 71, may react chemically with the electrode assembly 72 or the electrolyte, thereby adversely affecting charge and discharge of the battery cell 7.

To guarantee electrochemical performance of the battery cell 7, in some embodiments, a portion of the adhesion member 75 is arranged on an outer side of the housing 71 along the second direction Y, and the adhesion member 75 on an outer side of the edge 711 of the housing 71 can connect the sealed area 711a, thereby improving sealing performance at the connection and reducing the risk of external water vapor entering the housing 71 from the connection.

Still referring to FIGs. 8 and 9, in some embodiments, the connection portion 74 is entirely located in the sealed area 711a, and the connection portion 74 occupies no space inside the housing 71, thereby further improving utilization of space of the electrode assembly 72 and further increasing the energy density of the battery cell 7.

Still referring to FIGs. 8 and 9, in some examples, the adhesion member 75 includes a body portion 751 and a positioning portion 752. At least a portion of the body portion 751 is arranged around an outer side of the connection portion 74 and welded to the sealed area 711a, to separate the sealed area 711a from the connection portion 74. The positioning portion 752 is disposed contiguously with the body portion 751 and is located on a side of the body portion 751 away from the electrode assembly 72. The positioning portion 752 is arranged around an outer side of the electrode lead-out portion 73 and is welded to the sealed area 711a, so as to separate the electrode lead-out portion 73 from the sealed area 711a. Specifically, the positioning portion 752 can be fused and connected to the heat sealing layer of the housing 71 to improve sealing performance thereof.

Optionally, a dimension of the connection portion 74 along the second direction Y is equal to a dimension of the body portion 751 along the second direction Y, and the connection portion 74 and the body portion 751 are fully overlap, which sufficiently increases the dimension of the connection portion 74 along the second direction Y, thereby increasing current flow capacity of the tab 722.

Optionally, the body portion 751 has a first edge close to the main body portion 721 along the second direction Y, and the sealed area 711a has a second edge close to the main body portion 721 along the second direction Y. Along the second direction Y, the first edge exceeds the second edge, in other words, the body portion 751 exceeds the sealed area 711a, so that the body portion 751 can further prevent direct contact between the connection portion 74 and the sealed area 711a, thereby reducing the risk of short circuit.

Optionally, the positioning portion 752 has a third edge away from the main body portion 721 along the second direction Y, and the sealed area 711a has a fourth edge away from the main body portion 721 along the second direction Y. Along the second direction Y, the third edge exceeds the fourth edge, in other words, the positioning portion 752 exceeds the sealed area 711a, so that the positioning portion 752 can further prevent direct contact between the electrode lead-out portion 73 and the sealed area 711a, thereby reducing the risk of short circuit.

Optionally, a dimension of the body portion 751 along the first direction X is larger than a dimension of the positioning portion 752 along the first direction X, which can guarantee that the adhesion member 75 fully covers the connection portion 74 along the first direction X, thereby guaranteeing insulation between the connection portion 74 and the sealed area 711a.

Optionally, a bonding force between the positioning portion 752 and the sealed area 711a is stronger than a bonding force between the body portion 751 and the connection portion 74. The stronger bonding force between the positioning portion 752 and the sealed area 711a can improve sealing performance at the bond, which can prevent, to a certain extent, external water and oxygen from entering the battery cell 7.

Steps of assembling the battery cell 7 are as follows:
Provide the electrode lead-out portion 73 and the adhesion member 75, where the adhesion member 75 includes the body portion 751 and the positioning portion 752. The positioning portion 752 may be arranged around the outer side of the electrode lead-out portion 73 in advance through adhesion or welding. Provide two body portions 751, and arrange the two body portions 751 on two sides of the electrode lead-out portion 73 along the thickness direction, respectively. Connect the two body portions 751 to the positioning portion 752, and separately arrange the body portion 751 and the electrode lead-out portion 73. In other words, the body portion 751 is not fused in advance. The positioning portion 752 may be adhered to the electrode lead-out portion 73 through glue or may be directly welded to the electrode lead-out portion 73.

Provide the electrode assembly 72, where the electrode assembly 72 includes the main body portion 721 and the tab 722 connected to the main body portion 721.

Connect the electrode lead-out portion 73 to the tab 722 to form the connection portion 74.

Fuse the body portion 751 and the positioning portion 752 to make the fusion area surround the electrode lead-out portion 73 and cover the connection portion 74.

Provide the housing 71, and accommodate the electrode assembly 72 in the housing 71. Fuse the edge 711 of the housing 71 to form the sealed area 711a, and make the at least a portion of the connection portion 74 locate in the sealed area 711a.

Still referring to FIGs. 8 and 9, in some embodiments, a dimension of the sealed area 711a along the second direction Y is larger than the dimension of the connection portion 74 along the second direction Y The sealed area 711a fully covers the connection portion 74 in the second direction Y, which can seal a side of the connection portion 74 away from the electrode assembly 72 and improve sealing performance, thereby reducing the risk of external water and oxygen entering the housing 71 from the connection portion 74 and guaranteeing the electrochemical performance of the battery cell 7.

In some embodiments, the edge 711 of the housing 71 has a first surface 711b at an end away from the main body portion 721, and the sealed area 711a includes an end portion away from the main body portion 721 along the second direction Y, where a distance between the first surface 711b and the end portion is 1 mm to 2 mm.

The inventors have found that when a distance between the sealed area 711a and the first surface 711b of the housing 71 is relatively small, the heat sealing layer of the housing 71 is possible to overflow during top sealing of the housing 71 by packaging equipment, and the overflowing heat sealing layer may be adhered to the packaging equipment. After the top sealing is completed, the packaging equipment may drive the heat sealing layer to move together, which causes the housing 71 to be torn out.

However, in these embodiments of this application, the distance between the first surface 711b of the housing 71 and the end portion is set to 1 mm to 2 mm. With the distance in this range, the possibility of overflow of the heat sealing layer of the housing 71 during top sealing can be reduced. Moreover, setting this range can also reduce the risk of external water and oxygen entering the housing 71 from the heat sealing layer, thereby guaranteeing the electrochemical performance of the battery.

Referring to FIGs. 8 and 9, as a specific embodiment of this application, the battery cell 7 includes the housing 71, the electrode assembly 72, the electrode lead-out portion 73, and the adhesion member 75. The housing 71 includes the first packaging film and the second packaging film. The first packaging film and the second packaging film are connected to form the sealed area 711a at the edge thereof, such that a sealed accommodation cavity is formed inside the housing 71. The electrode assembly 72 is accommodated in the accommodation cavity of the housing 71, and the electrode assembly 72 includes the main body portion 721 and the tab 722, where the main body portion 721 and the tab 722 are connected. One end of the electrode lead-out portion 73 is electrically connected to the tab 722 to form the connection portion 74, and another end exceeds the housing 71 to be electrically connected to the external device. The connection portion 74 is entirely located in the sealed area 711a, and the dimension of the sealed area 711a along the second direction Y is larger than the dimension of the connection portion 74 along the second direction Y to improve the sealing performance therein. The adhesion member 75 is configured to adhere the connection portion 74 to the inside of the sealed area 711a, and the adhesion member 75 separates the connection portion 74 from the sealed area 711a, which reduces the risk of short circuit on the connection portion 74 and in the sealed area 711a. A portion of the adhesion member 75 is arranged on the outer side of the housing 71 along the second direction Y, so as to make the portion of the adhesion member 75 connect the sealed area 711a, which improves the sealing performance at the connection and can fully separate the sealed area 711a from the electrode lead-out portion 73, thereby reducing the risk of short circuit. In this embodiment of this application. the adhesion member 75 includes the positioning portion 752 and two body portions 751, where the positioning portion 752 and the body portion 751 are disposed continuously. The positioning portion 752 is located on a side of the body portion 751 away from the main body portion 721, and the positioning portion 752 is connected to the sealed area 711a. The two body portions 751 are arranged on two sides of the connection portion 74 along the thickness direction, respectively. End portions of the two body portions 751 along a first direction X are configured as covering the connection portion 74 after the tab 722 and the electrode lead-out portion 73 are connected.

Although this application has been described with reference to the preferred embodiments, various modifications can be made to this application without departing from the scope of this application and the components therein can be replaced with equivalents. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, comprising:
a housing, wherein the housing is provided with a sealed area at an edge;
an electrode assembly accommodated in the housing, wherein the electrode assembly comprises a main body portion and a tab connected to the main body portion; and
an electrode lead-out portion, wherein at least a portion of the electrode lead-out portion is electrically connected to the tab to form a connection portion, and at least a portion of the connection portion is located in the sealed area.

2. The battery cell according to claim 1, wherein the battery cell further comprises an adhesion member, and the adhesion member is configured to adhere the connection portion to the sealed area.

3. The battery cell according to claim 2, wherein the adhesion member fully covers a surface of the connection portion.

4. The battery cell according to claim 2, wherein a dimension of the adhesion member along a first direction exceeds a dimension of the electrode lead-out portion along the first direction, the first direction being an extension direction of the sealed area;
and/or
the dimension of the adhesion member along the first direction exceeds a dimension of the tab along the first direction.

5. The battery cell according to claim 2, wherein a portion of the adhesion member is arranged on an outer side of the housing along a second direction, the second direction being a direction from the main body portion to the tab.

6. The battery cell according to any one of claims 1 to 5, wherein the connection portion is entirely located in the sealed area.

7. The battery cell according to claim 6, wherein a dimension of the sealed area along a second direction is larger than a dimension of the connection portion along the second direction, the second direction being a direction from the main body portion to the tab.

8. The battery cell according to any one of claims 1 to 7, wherein
the edge has a first surface at an end away from the main body portion, and the sealed area comprises an end portion away from the main body portion along a second direction, wherein a distance between the first surface and the end portion is 1 mm to 2 mm, and the second direction is a direction from the main body portion to the tab.

9. A battery, comprising the battery cell according to any one of claims 1 to 8.

10. An electric apparatus, comprising the battery according to claim 9, wherein the battery is configured to supply electrical energy.
